**Europäisches Patentamt**

**European Patent Office**

**Office européen des brevets**

(19)

(11) Veröffentlichungsnummer : **0 504 636 B1**

(12) **EUROPÄISCHE PATENTSCHRIFT**

(45) Veröffentlichungstag der Patentschrift :
**15.11.95 Patentblatt 95/46**

(51) Int. Cl.$^6$ : **G02F 1/33**

(21) Anmeldenummer : **92103320.5**

(22) Anmeldetag : **27.02.92**

(54) **Vorrichtung zur kreisförmigen Ablenkung eines Lichtstrahles.**

(30) Priorität : **21.03.91 DE 4109256**

(43) Veröffentlichungstag der Anmeldung :
**23.09.92 Patentblatt 92/39**

(45) Bekanntmachung des Hinweises auf die
Patenterteilung :
**15.11.95 Patentblatt 95/46**

(84) Benannte Vertragsstaaten :
**AT DE FR GB IT**

(56) Entgegenhaltungen :
**US-A- 3 633 995**

(56) Entgegenhaltungen :
**SOVIET PATENTS ABSTRACTS Section EI,
Week 8826, 7. Februar 1988 Derwent Publications Ltd., London, GB; Class S, AN 88-182 248
; & SU-A-1 357 729
PATENT ABSTRACTS OF JAPAN vol. 7, no.
146 (P-206) 25. Juni 1983 ; & JP-A-58 057 110
SOVIET PATENTS ABSTRACTS Section EI,
Week 8610, 22. März 1986 Derwent Publications Ltd., London, GB; Class S, AN 86-067 422
; & SU-A-1 173 191**

(73) Patentinhaber : **GRUNDIG E.M.V.
Elektro-Mechanische Versuchsanstalt Max
Grundig GmbH & Co. KG
Kurgartenstrasse 37
D-90762 Fürth (DE)**

(72) Erfinder : **Hallas, Ernst, Dr., GRUNDIG E.M.V.,
Max Grundig
holländ. Stiftung & Co KG.,
Kurgartenstrasse 37
W-8510 Fuerth (DE)**

## Beschreibung

Die Erfindung betrifft eine Vorrichtung zur Ablenkung eines Lichtstrahles durch Beugung des Lichtstrahls an einem optischen Phasengitter nach Debye und Sears, wobei dieses optische Phasengitter durch die Dichteunterschiede eines flüssigen Stoffes erzeugt wird. Diese Dichteunterschiede werden durch einen Ultraschallsender erzeugt, der in den flüssigen Stoff einstrahlt. Die Richtung des einfallenden Lichtstrahles ist senkrecht zur Ultraschallrichtung zu wählen. Die Frequenz des Ultraschalls und damit die Abstandsfolge der Dichteunterschiede im flüssigen Stoff definiert die Gitterkonstante des Phasengitters. Bekannt sind akustooptische Filter; sie werden in Gas- oder Flüssigkeitsanalysatoren eigesetzt und ersetzen die in diesen Geräten benutzten Interferenzfilter. Durch die mögliche Abstimmung der Ultraschallfrequenz eines Piezokristalls wird beispielsweise ein TeO$_2$-Kristall für entsprechende Wellenlängen optisch durchlässig und die für Absorptionsmessungen benötigten Wellenlängen sind leicht auszufiltern.

Eine derartige Anordnung findet man in dem Prozeß-Spektrometer LimorL der Fa. Maihak AG. Dort werden die im Photometern üblichen Interferenzfilter durch ein oben beschriebenes akusto-optisch durchstimmbares Filter ersetzt. Die für die Messung spezifische Wellenlänge wird durch Anlegen eines Hochfrequenzsignals an das akusto-optische Filter erzeugt. Mit dieser Anordnung wird ein Filter realisiert, das nur für eine abstimmbare Frequenz durchlässig ist.

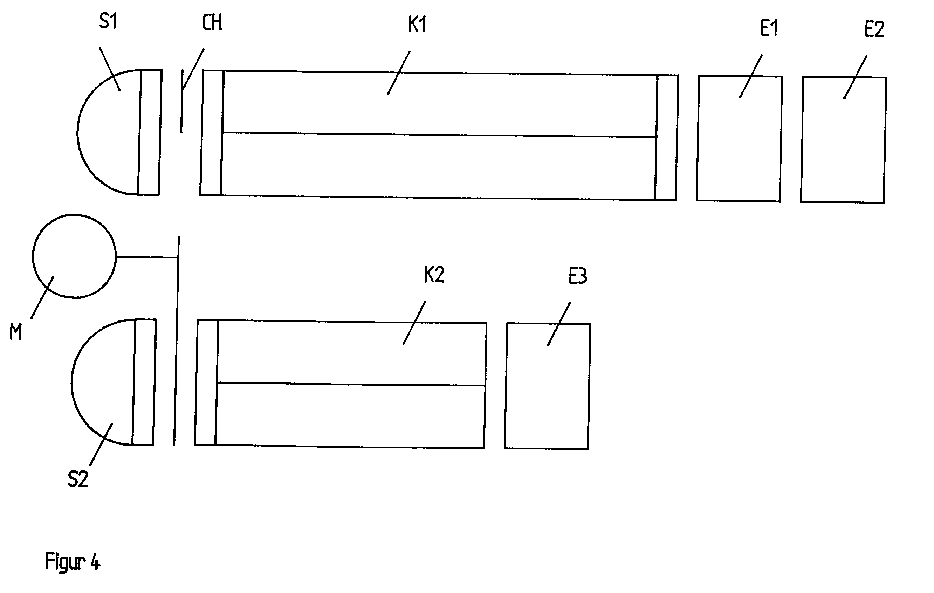

Die Ablenkung eines Lichtstrahles auf beispielsweise verschiedene Meß- bzw. Vergleichsküvetten, die ein zu messendes Gas oder auch eine zu messende Flüssigkeit enthalten, oder aber die für die Kalibrierung bzw. zur Kontrolle notwendigen Vergleichsstoffe enthalten, bzw. die Ablenkung eines Lichtstrahles auf verschiedene Filter wird im allgemeinen durch mechanische Anordnungen erreicht. Vielfach werden auch mehrere Lichtquellen eingesetzt, von denen jede in eine Meßküvette Licht einstrahlt, wobei ein von einem Motor angetriebenes Chopperrad zyklisch jeweils einen Lichtstrahl durch ein Fenster am Chopperrad einstrahlen läßt, während die anderen abgedeckt werden. Eine derartige Anordnung ist in dem NDIR - Fotometer Uras 10 E der Fa. Hartmann und Braun AG enthalten und in Figur 4 dargestellt. Die Strahlung eines thermischen Infrarotstrahlers S1 fällt über ein Chopperrad CH in die Küvette K1, die rohrförmig ausgebildet ist, und durch einen Steg in eine Meß-und eine Vergleichsküvette aufgeteilt ist.

Anschließend gelangt der Lichtstrahl in die Empfänger E1 und E2. Die Anordnung enthält außerdem einen zweiten thermischen Infrarotstrahler S2 der in die Meßküvette K2 über das Chopperrad CH einstrahlt. Der Meßküvette K2 folgt ein Empfänger E3. Das Chopperrad CH wird von einem Motor M gedreht, so daß das Fenster zyklisch die Einstrahlung des thermischen Infrarotstrahlers S1 oder S2 in die jeweilige Meßküvette zuläßt. Der Nachteil solcher oder ähnlicher bekannter Anordnungen, bei denen ein Lichtstrahl abgelenkt oder unterbrochen werden muß, besteht in der notwendigen, präzise bewegten mechanischen Anordnung. Diese ist zum einen dem bei bewegten mechanischen Teilen bekannten Verschleiß und mechanischer Trägheit unterworfen und zum anderen verursacht sie relativ hohe Kosten.

Der Erfindung liegt deshalb die Aufgabe zugrunde, eine Vorrichtung anzugeben, die eine Ablenkung des Lichtstrahles, insbesondere eine kreisförmige oder kreisähnliche Ablenkung in Gas- oder Flüssigkeitsanalysegeräten, mit einfachen, nicht mechanisch bewegten und damit verschleißarmen Mitteln erlaubt.

Diese Aufgabe wird gemäß der Erfindung durch die im kennzeichnenden Teil des Patentanspruches 1 angegebenen Merkmale dadurch gelöst, daß bei einem zylinderförmigen Gefäß, das einen flüssigen Stoff beinhaltet, an der Mantelfläche eine vorgebbare Anzahl von Ultraschallsendern angebracht ist, die Ultraschallwellen in der Richtung zur Zylinderachse abstrahlen und somit den flüssigen Stoff zu Schwingungen entsprechend der Ultraschallfrequenz anregen. Die Ultraschallsender werden ggf. zyklisch nacheinander angesteuert. Durch die mit einem Ultraschallsender erzeugten Druck-Schwingungen entsteht ein optisches Phasengitter, das einen an einer der beiden Stirnflächen des zylinderförmigen Gefäßes einstrahlenden Lichtstrahl entsprechend der bekannten optischen Bedingungen für Interferenz und Beugung beeinflußt. Auf diese Weise wird das aus dem zylinderförmigen Gefäß austretende Licht in ein Hauptmaximum in der Achse des einfallenden Lichtstrahles und mehrere Nebenmaxima, die eine Beugung unter einen durch die Formel

$$\sin \alpha = \frac{k\lambda}{g} \quad (1)$$

definierten Winkel $\alpha$ erfahren, aufgespaltet. In der Formel (1) bedeutet:

$\lambda$: die Wellenlänge des einfallenden Lichtstrahls
$g$: die Gitterkonstante des opt. Gitters
$k$: $k = 0,1,2...$ gibt die Ordnung der Maxima an, z.B. $k=2$
= Nebenmaximum zweiter Ordnung.

Durch eine auswählbare, z.B. zyklisch sequentielle Ansteuerung der Ultraschallwandler wird durch die Ablenkung des Lichtstrahles um den Winkel $\alpha$ bzw. die mehreren möglichen Winkel $\alpha_k$, wobei $\alpha_k$ den Winkel des k-ten Nebenmaximums angibt, eine quasi-kontinuierliche, einen Kreis beschreibende Ablenkung der Lichtstrahlung entsprechend einen ausgeblendeten Nebenmaximum erreicht. Um die Gitterkonstante des durch die Ultraschallschwingungen erzeugten optischen Phasengitters entsprechend einem gewünschten Ablenkungswinkel verändern zu können bzw. das optische Gitter auf einfallende Lichtstrahlen mit verschiedenen Frequenzen optimieren zu können, sind die Ultraschallsender in einer vorteilhaften Ausgestaltung der Erfindung in ihrer Ultraschallfrequenz abstimmbar.Durch diese verschiedenen möglichen Ultraschallfrequenzen und damit den verschiedenen möglichen Schwingungsfrequenzen im flüssigen Stoff, den das zylinderförmige Gefäß beinhaltet, ist die Gitterkonstante und somit die Beugungs- bzw. Ablenk-Wirkung des optischen Phasengitters veränderbar und damit an verschiedene äußere Bedingungen anpassbar.

Eine weitere vorteilhafte Ausgestaltung der Erfindung sieht mehrere mögliche, in ihren Abmessungen, insbesondere im Durchmesser, unterschiedliche zylinderförmige Gefäße vor, die in der Anordnung austauschbar sind. Auf diese Weise wird erreicht, daß die verwendeten Gefäße auf die Ultraschallfrequenz abgestimmt sind, d.h. daß der Durchmesser des zylinderförmigen Gefäßes an die Ultraschallfrequenz derart abgestimmt ist, daß er ein ganzzahliges Vielfaches der Wellemlänge des Ultraschalls ist. So kann sich in dem flüssigen Stoff eine stehende Welle ausbilden, die ein feststehendes optisches Gitter mit maximalen Amplitudenunterschieden der Maxima und Minima der stehenden Welle verursacht.

Zur Absorption von Frequenzen der einfallenden Lichtstrahlen, die für eine Messung nicht benötigt werden oder die für die Messung störend sind, kann in einer weiteren Ausgestaltung der erfindungsgemäßen Vorrichtung das zylinderförmige Gefäß mit einem flüssigen Stoff gefüllt sein, der diese Frequenzen vorrangig absorbiert.

Eine weitere vorteilhafte Ausbildung der Erfindung ergibt sich, wenn die an der Mantelfläche des zylinderförmigen Gefäßes angebrachten Ultraschallsender mit verschiedenen Frequenzen ansteuerbar sind. Auf diese Weise wird erreicht, daß bei Einfall von nicht monochromatischem Licht verschiedene Frequenzen in verschiedene Richtungen und unter verschiedenen Beugungswinkeln geteilt wird.

Durch das Anbringen einer kreisförmigen, lichtundurchlässigen Blende am Ort des auftretenden Hauptmaximums des durch das optische Phasengitter erzeugten Interfrequenzmusters wird der unabgelenkte Strahl ausgeblendet. So werden in vorteilhafter Weise nur die abgelenkten Nebenmaxima, die bei sequentieller Ansteuerung der Ultraschallwandler die rotierenden Lichtstrahlen ergeben, ausgenutzt .

Statt der kreisförmigen Blende in der Bildebene können Schlitzblenden mit lichtdurchlässigen, ringförmigen Schlitzen in einem bestimmten Abstand von Mittelpunkt angebracht werden. Ein um einen bestimmten Winkel gebeugter Lichtstrahl kann durchtreten, bzw. bei mehreren Schlitzen können mehrere um verschiedene Winkel abgelenkte Lichtstrahlen durchtreten.Auf diese Weise können ein oder mehrere definierte Ablenkwinkel realisiert werden. Bei sequentieller Ansteuerung der Ultraschallwandler können so auf vorteilhafte und einfache Weise ein oder mehrere rotierende Lichtstrahlen erzeugt werden.

Im folgenden wird die Erfindung an Hand der Figuren 1 bis 4 erläutert.

Es zeigen:

Figur 1  Die Beugung eines Lichtstrahls an einem mit Ultraschall erzeugtem optischen Phasengitter,

Figur 2  eine Anordnung mit gemäß der Erfindung auf einen Zylinderförmigen Gefäß aufgebrachten Ultraschallsendern,

Figur 3  eine mögliche Blende mit ringförmigen, lichtdurchlässigen Schlitz,

Figur 4  eine Anordnung zur Verteilung von Meßlichtstrahlen gemäß einer bekannten Anordnung.

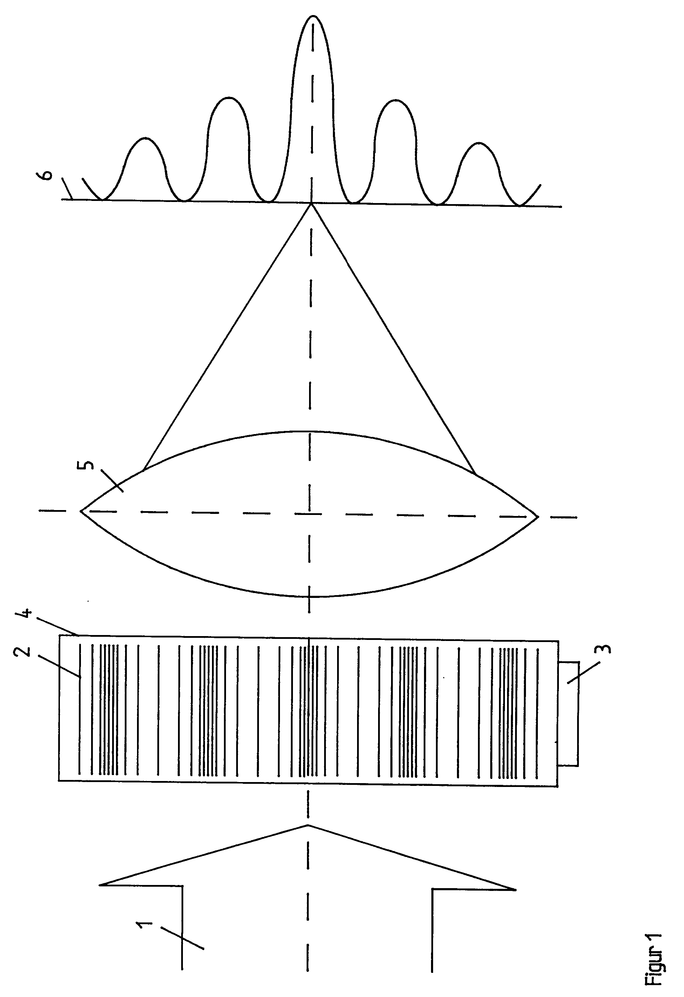

Nach Figur 1 fällt ein Lichtstrahl 1 auf ein durch Ultraschallschwingungen mittels des Ultraschallsenders 3 in dem flüssigen Stoff 2 erzeugtes optisches Phasengitter. Der durch das Phasengitter gebeugte Lichtstrahl wird über eine Sammellinse 5 abgebildet. Dabei ergibt sich in der Bild- bzw. Brennebene 6 ein Interferenzbild mit einem Hauptmaximum und mehreren Nebenmaxima, von denen je auf beiden Seiten des Hauptmaximums zwei dargestellt sind.

Das in dem zylinderförmigen Gefäß 4 erzeugte optische Gitter entsteht durch die Dichteunterschiede in der Flüssigkeit 2, die mit dem Ultraschallsender 3 erzeugt werden. Die Dichteunterschiede werden von den Schwingungen in der Flüssigkeit erzeugt, und haben unterschiedliche Brechzahlen für Licht zur Folge, d.h. es entsteht ein optisches Phasengitter.

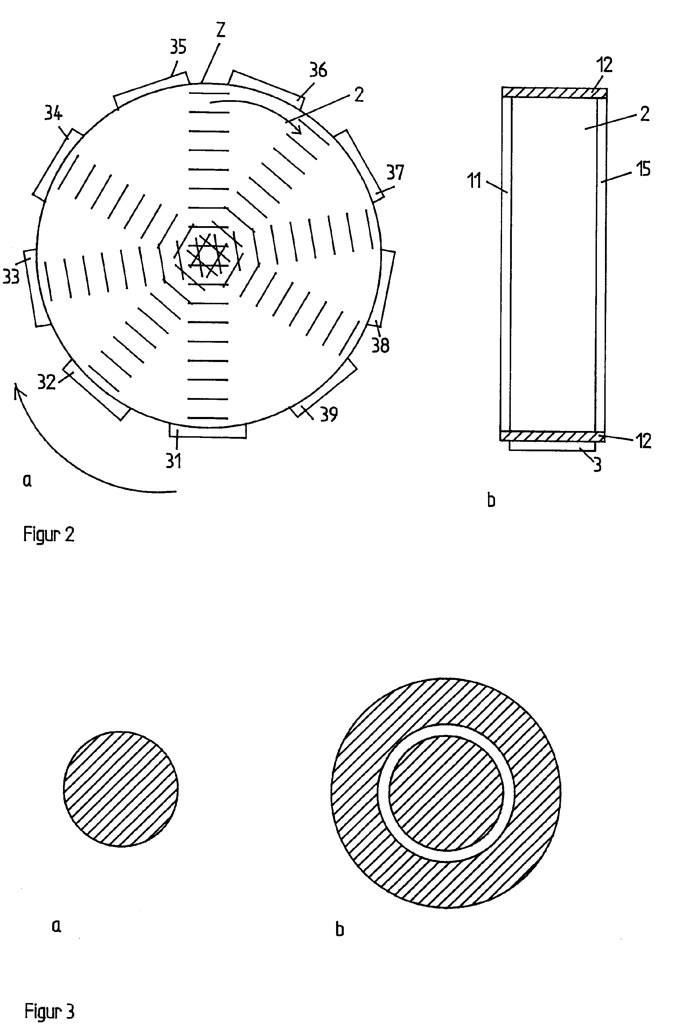

In Figur 2a ist eine Ansicht des zylinderförmigen Gefäßes von einer Stirnseite, d.h. von der Seite, in die der Lichtstrahl einfällt bzw. austritt dargestellt. Figur 2b zeigt einen Seitenschnitt.

An der Mantelfläche des Zylinders Z sind die Ultraschallsender 31 bis 39 angebracht, die sequentiell in Pfeilrichtung angesteuert werden. Im Inneren des zylinderförmigen Gefäßes bilden sich entsprechend des gerade angesteuerten Ultraschallsenders Phasengitter in dem flüssigen Stoff 2 aus, die in der Figur 2a durch Striche ausgehend von einem Ultraschallsender angedeutet sind. Das erst durch den Ultraschallsender 31 erzeugte optische Phasengitter wird durch ein zweites ersetzt, sobald der Ultraschallsender 32 angesteuert wird usw. .

Es entsteht also eine quasi-kontinuierliche Drehung des optischen Gitters. Dieser Drehung folgt das Interfrequenzmuster entsprechend Figur 1. Durch die Ausblendung des Hauptmaximums und gegebenenfalls ein oder mehrerer Nebenmaxima, so daß beispielsweise nur ein Nebenmaximum durchgelassen wird, kann ein abgelenkter, rotierender Lichtstrahl erzeugt werden. Die Ausblendung erfolgt durch eine Schlitzblende, wie es weiter oben bereits ausgeführt wurde.

Figur 2b zeigt eine Seitenansicht des zylinderförmigen Gefäßes mit dem lichtdurchlässigen Stirnflächen 11 und 15, der Mantelfläche 12 und den darauf angebrachten Ultraschallsendern 3. Im Inneren des Gefäßes befindet sich ein flüssiger Stoff 2, der, wie weiter oben beschrieben für die einzelnen Erfordernisse günstig ausgewählt werden kann.

In Figur 3 sind mehrere mögliche Blenden dargestellt.

In Figur 3a ist eine Blende zur Ausblendung des Hauptmaximums gezeigt, während 3b eine Schlitzblende darstellt, wie sie zur Erzeugung eines einzelnen rotierenden Lichtstrahls benutzt werden kann. Schlitzblenden zur Erzeugung mehreren rotierender Lichtstrahlen sind wie diejenige in Figur 3b aufgebaut, haben jedoch mehrere für die entsprechende Strahlung durchlässige, ringförmig Schlitze. Die schraffiert dargestellten Flächen bedeuten lichtundurchlässige Bereiche, während die ringförmigen Schlitze, die keine Kennzeichnung haben, lichtdurchlässige Bereiche darstellen. Diese Blenden werden in der Bildebene angebracht und erlauben damit die Ausblendung der vorbestimmten Haupt-/Nebenmaxima.

## Patentansprüche

1. Vorrichtung zur Ablenkung eines Lichtstrahles (1) durch Beugung an einem optischen Phasengitter nach Debye und Sears, das durch periodische Dichteänderungen in einem Medium (2), insbesondere einer Flüssigkeit, erzeugt wird, indem eine Ultraschallquelle (3), deren Abstrahlrichtung senkrecht zur Lichtstrahlrichtung ist, das Medium (2) über Ansteuerungsmittel zu Schwingungen anregt und die Frequenz der Ultraschallschwingungen die Gitterkonstante bestimmt, dadurch gekennzeichnet, daß
   - das Medium (2) in einem zylinderförmigen Gefäß eingebracht ist und der Lichtstrahl (1) an einer der beiden Stirnflächen (11, 15) des zylinderförmigen Gefäßes (4) einfällt,
   - an der Mantelfläche (12) des zylinderförmigen Gefäßes (4) zwei oder mehrere Ultraschallsender (31 bis 39) so angebracht sind, daß sie die Ultraschallwellen in Richtung zur Zylinderachse abstrahlen
   - die Ultraschallsender (31 bis 39) zyklisch nacheinander von den Ansteuerungsmitteln derart angesteuert werden, daß durch diese Ansteuerung das so erzeugte optische Phasengitter entsprechend der Umschaltfrequenz von einem Ultraschallwandler auf den nächsten quasi-kontinuierlich gedreht wird und damit die durch die Interferenz entstehenden Nebenmaxima und das Hauptmaximum des Lichtstrahles gedreht werden.

2. Vorrichtung nach Anspruch 1, **dadurch gekennzeichnet**, daß die Ultraschallfrequenz der Ultraschallsender (31 bis 39) zur Abstimmung des optischen Phasengitters auf die Frequenz des Lichtstrahls veränderbar ist.

3. Vorrichtung nach Anspruch 1 oder Anspruch 2, **dadurch gekennzeichnet**, daß das zylinderförmige Gefäß (4) einen Durchmesser aufweist, der ein ganzzahliges Vielfaches der Ultraschallwellenlänge ist, wodurch sich eine durch den Ultraschall angeregte stehende Welle ausbreiten kann und daß das zylinderförmige Gefäß (4) austauschbar ist, um eine Anpassung an die Ultraschallfrequenz zu erreichen.

4. Vorrichtung nach einem oder meheren der Ansprüche 1 bis 3, **dadurch gekennzeichnet**, daß das zylinderförmige Gefäß (4) mit einem flüssigen Stoff (2) gefüllt ist, der die einfallende Strahlung in Frequenzbereichen, die nicht benötigt werden, absorbiert.

5. Vorrichtung nach einem oder mehreren der Ansprüche 1 bis 4, **dadurch gekennzeichnet**, daß die Ultraschallsender (31 bis 39) bei Einstrahlung von nicht monochromatischen Licht mit verschiedenen Frequenzen in den flüssigen Stoff (2) abstrahlen, um mehrere Teillichtstrahlen mit unterschiedlicher Frequenz und unterschiedlicher Ablenkung zu erzeugen.

6. Vorrichtung nach einem oder mehreren der Ansprüche 1 bis 5, **dadurch gekennzeichnet**, daß das Hauptmaximum der durch die Beugung am optischen Gitter und anschließende optische Abbildung entstandenen Lichtstrahlung durch eine kreisförmige, lichtundurchlässige Blende, die im Bereich des Hauptmaximums in der Bildebene (6) angebracht ist, ausgeblendet wird.

7. Vorrichtung nach einem oder mehreren der Ansprüche 1 bis 5, **dadurch gekennzeichnet**, daß in der optischen Bildebene (6) nach dem zylinderförmigen Gefäß (4) eine kreisförmige Schlitzblende mit ein oder mehreren ringförmigen Schlitzen angebracht ist, die nur für die Lichtstrahlen ein oder mehrerer, durch das optische Gitter erzeugter Nebenmaxima, frei sind.

## Claims

1. Device for the deflection of a light beam (1) by diffraction at a Debye and Sears optical phase grid which is produced by periodic variations in density in a medium (2), in particular a fluid, whereby an ultrasonic source (3), whose direction of radiation is perpendicular to the direction of the light beam, excites the medium (2) into oscillations via triggering means, and the frequency of the ultrasonic oscillations determines the grid constant, **characterised in that**
   - the medium (2) is placed in a cylindrical container and the light beam (1) enters one of the two end faces (11, 15) of the cylindrical container (4),
   - two or more ultrasonic transmitters (31 to 39) are placed on the external surface (12) of the cylindrical container (4) so that they radiate the ultrasonic waves in the direction of the axis of the cylinder.
   - the ultrasonic transmitters (31 to 39) are triggered cyclically in succession by the triggering means so that the optical phase grid produced by this triggering is rotated in a quasi-continuous manner in accordance with the frequency of switching from one ultrasonic transducer to the next and the secondary maxima and the main maximum of the light beam resulting from the interference are rotated.

2. Device according to Claim 1, **characterised in that** the ultrasonic frequency of the ultrasonic transmitters (31 to 39) can be varied in order to tune the optical phase grid to the frequency of the light beam.

3. Device according to Claim 1 or Claim 2, **characterised in that** the cylindrical container (4) has a diameter that is an integral multiple of the ultrasonic wavelength, by which a standing wave excited by the ultrasound can be propagated, and that the cylindrical container (4) can be interchanged to achieve matching to the ultrasonic frequency.

4. Device according to one or more of Claims 1 to 3, **characterised in that** the cylindrical container (4) is filled with a fluid material (2) which absorbs the incident radiation in unwanted frequency ranges.

5. Device according to one or more of Claims 1 to 4, **characterised in that** in the case of incident non-monochromatic light, the ultrasonic transmitters (31 to 39) radiate into the fluid material (2) at various frequencies to produce several partial light beams having different frequency and different deflection.

6. Device according to one or more of Claims 1 to 5, **characterised in that** the main maximum of the light radiation resulting from diffraction at the optical grating and subsequent optical focussing, is blanked out by a circular, optically transparent diaphragm which is placed in the focal plane (6) in the region of the main maximum.

7. Device according to one or more of Claims 1 to 5, **characterised in that** a circular slotted diaphragm with one or more annular slots which are free only for the light beams having one or more secondary maxima produced by the optical grating is placed in the optical focal plane (6) after the cylindrical container (4).

## Revendications

1. Dispositif pour dévier un faisceau de lumière (1), par diffraction dans un réseau de phase optique selon Debye et Sears, qui est produit par des modifications périodiques de densité dans un milieu (2), notamment un liquide, dans lequel une source d'ultrasons (3), dont la direction de déviation est perpendiculaire à la direction du faisceau de lumière, met en oscillations le milieu (2) à l'aide de moyens de commande et la fréquence des oscillations ultrasonores détermine la constante du réseau, caractérisé en ce que
   - le milieu (2) est placé dans un récipient cylindrique et le faisceau de lumière (1) tombe sur l'une des deux surfaces frontales (11,15) du récipient cylindrique (4),
   - deux ou plusieurs émetteurs d'ultrasons (31 à 39) sont disposés sur la surface enveloppe (12) du récipient cylindrique (4) de telle sorte que les ondes ultrasonores sont émises en direction de l'axe du cylindre,

- que les émetteurs d'ultrasons (31 à 39) sont commandés cycliquement, les uns après les autres par les moyens de commande de telle sorte que sous l'effet de cette commande, le réseau de phase optique ainsi produit pivote d'une manière quasiment continue en fonction de la fréquence de commutation depuis un transducteur à ultrasons au suivant et que par conséquent les maxima secondaires, qui sont produits par l'interférence, et le maximum principal du faisceau de lumière pivotent.

2. Dispositif selon la revendication 1, caractérisé en ce que la fréquence des ultrasons des émetteurs d'ultrasons (31 à 39) peut être modifiée pour le réglage du réseau de phase optique sur la fréquence du faisceau de lumière.

3. Dispositif selon la revendication 1 ou 2, caractérisé en ce que le récipient cylindrique (1) possède un diamètre qui est égal à un multiple entier de la longueur d'onde des ultrasons; ce qui a pour effet qu'une onde stationnaire excitée par les ultrasons peut se propager, et que le récipient cylindrique (4) peut être remplacé pour l'obtention d'une adaptation à la fréquence des ultrasons.

4. Dispositif selon une ou plusieurs des revendications 1 à 3, caractérisé en ce que le récipient cylindrique (4) est rempli par une substance (2), qui absorbe le rayonnement incident dans des gammes de fréquences, qui ne sont pas nécessaires.

5. Dispositif selon une ou plusieurs des revendications 1 à 4, caractérisé en ce que lors de l'introduction d'une lumière non monochromatique possédant des fréquences différentes dans la substance liquide (2), les émetteurs d'ultrasons (31 à 39) exécutent une émission pour produire plusieurs faisceaux de lumière partiels ayant des fréquences différentes et des déviations différentes.

6. Dispositif selon une ou plusieurs des revendications 2 à 5, caractérisé en ce que le maximum principal du faisceau de lumière qui apparaît par diffraction au niveau du réseau optique et par formation ultérieure d'une image optique, est diaphragmé par un diagramme circulaire opaque à la lumière, qui est disposé au voisinage du maximum principal dans le plan image (6).

7. Dispositif selon une ou plusieurs des revendications 1 à 5, caractérisé en ce que dans le plan image optique (6) est disposé, en aval du récipient cylindrique (4), un diaphragme circulaire comportant une ou plusieurs fentes annulaires, qui sont ouvertes uniquement pour les faisceaux de lumière possédant un ou plusieurs maxima secondaires produits par le réseau optique.

Figur 1

EP 0 504 636 B1

Figur 2

Figur 3

Figur 4